# EUROPEAN PATENT APPLICATION

(11) **EP 2 306 308 A1**
(43) Date of publication of application: **06.04.2011**
(21) Application number: 10174416.7
(22) Date of filing: 27.08.2010
(51) Int. Cl.: G06F 9/445

(54) **Image forming apparatus, method for providing user interface content, and method for receiving user interface content in host device**

(30) Priority: 01.10.2009 KR 20090093926
(71) Applicant: Samsung Electronics Co., Ltd., Gyeonggi-do (KR)
(72) Inventor: Kang, Soo-young, Seoul (KR)
(74) Representative: Walaski, Jan Filip

(57) **Abstract**

A method of providing user interface (UI) content in an image forming apparatus is provided, which includes receiving attribute information of a second web browser installed in a host device, if the host device accesses the image forming apparatus using location information of the image forming apparatus and the second web browser requests the UI content of the image forming apparatus connected to the host device; determining whether the UI content displayed on the first display unit is identically displayed on a second display unit of the host device, using the received attribute information; and providing a plug-in corresponding to the second web browser according to a result of determining. Therefore, the host device may normally display the UI content of the image forming apparatus 100 using the second web browser which is in a different form from the first web browser of the image forming apparatus, and thus a user's screen may be optimized so that user convenience may be promoted.

## Description

The present invention relates to an image forming apparatus, a method for providing user interface (UI) content in an image forming apparatus, and a method for receiving UI content in a host device. More particularly, aspects of the present disclosure relate to an image forming apparatus, a method for providing UI content in an image forming apparatus, and a method for receiving UI content in a host device so that the host device can display the UI content provided by the image forming apparatus normally.

Image forming apparatuses function to generate, print, receive and transmit image data, and include, for example, printers, scanners, copiers, fax machines, and multifunctional peripherals (MFP) combining operations of one or more of those devices.

Recently, image forming apparatuses to display UI screens using web pages are emerging as web technologies advance.

For example, a web server included in an image forming apparatus creates a UI screen with a web page, and a web browser displays the created UI screen.

Accordingly, an external device having a web browser may access the web server of the image forming apparatus. The external device may then check the UI screen of the image forming apparatus and display the same UI screen as the UI screen of the image forming apparatus.

However, if a web browser of an image forming apparatus differs from a web browser of a host device, it is impossible for the host device to display the UI screen of the image forming apparatus normally.

One or more embodiments of the present disclosure provide an image forming apparatus, a method for providing user interface (UI) content in an image forming apparatus, and a method for receiving UI content in a host device, in order to provide the host device with a plug-in suitable for configurations of a web browser of the host device so that the host device may normally display the UI content provided by the image forming apparatus.

According to an aspect of the present disclosure, there is provided a method of providing UI content in an image forming apparatus, which is connected to at least one host device and in which a web server and a first web browser are installed to display UI content created using a web language on a first display unit, the method including receiving attribute information of a second web browser installed in the host device, if the host device accesses the image forming apparatus using location information of the image forming apparatus and the second web browser requests the UI content of the image forming apparatus connected to the host device; determining whether the same UI content as that displayed on the first display unit is displayed on a second display unit of the host device, using the received attribute information; and providing a plug-in corresponding to the second web browser according to a result of determining.

The provided plug-in may be installed in the host device.

The providing of the plug-in may include displaying information regarding the plug-in provided to the host device on the second display unit.

The attribute information of the second web browser may include at least one of a type and version of the second web browser, an installed plug-in, an installable plug-in and a riskiness rating.

The provided plug-in may include at least one of information regarding a resolution, a font type, a font size, style information corresponding to a graphical library, a brightness of a browser and a touch sensitivity of a touch screen.

The method may further include displaying a message or an icon stating that there is no plug-in corresponding to the second web browser upon determining that there is no plug-in corresponding to the second web browser. The message or the icon may be displayed on at least one of the first display unit and the second display unit of the host device.

The method may further include recommending a third web browser to enable the same UI content as that displayed on the first display unit to be displayed on the second display unit, if there is no plug-in corresponding to the second web browser.

The determining of whether the same UI content as that displayed on the first display unit is displayed on the second display unit may be performed using a lookup table, which is stored in the image forming apparatus and contains the attribute information of the second web browser.

If the plug-in provided to the second web browser is installed in the host device, the host device is able to access the UI content.

According to an aspect of the present disclosure, there is provided an image forming apparatus, which is connected to at least one host device and in which a web server and a first web browser are installed to display UI content created using a web language on a first display unit, the image forming apparatus including a receiving unit to receive attribute information of a second web browser installed in the host device, if the host device accesses the image forming apparatus using location information of the image forming apparatus and the second web browser requests the UI content of the image forming apparatus connected to the host device; a determination unit to determine whether the same UI content as that displayed on the first display unit is displayed on a second display unit of the host device, using the received attribute information; and a control unit to provide a plug-in corresponding to the second web browser according to a result of determining.

The provided plug-in may be installed in the host device.

The control unit may display information regarding the plug-in provided to the host device on the second display unit.

The attribute information of the second web browser may include at least one of a type and version of the second web browser, an installed plug-in, an installable plug-in and a riskiness rating.

The provided plug-in may include at least one of information regarding a resolution, a font type, a font size, style information corresponding to a graphical library, a brightness of a browser and a touch sensitivity of a touch screen.

The second display unit may display a message or an icon stating that there is no plug-in corresponding to the second web browser upon determining that there is no plug-in corresponding to the second web browser.

The first display unit may display a message or an icon recommending a third web browser to enable the same UI content as that displayed on the first display unit to be displayed on the second display unit, if there is no plug-in corresponding to the second web browser.

The determination unit may determine whether the same UI content as that displayed on the first display unit is displayed on the second display unit, using a lookup table, which is stored in the image forming apparatus and contains the attribute information of the second web browser.

If the plug-in provided to the second web browser is installed in the host device, the host device is able to access the UI content.

According to an aspect of the present disclosure, there is provided a method of receiving UI content in a host device, which is connected to an image forming apparatus to display UI content created using a web language on a first display unit through a first web browser, the method including the host device in which a second web browser is installed accessing the image forming apparatus using location information of the image forming apparatus; the second web browser requesting the UI content of the image forming apparatus connected to the host device; transmitting attribute information of the second web browser; receiving a plug-in from the image forming apparatus and displaying a window to check whether the plug-in is installed on a second display unit of the host device, if the image forming apparatus determines, using the received attribute information, that the same UI content as that displayed on the first display unit is not able to be displayed on the second display unit; and installing the plug-in in the host device, if a command to install the plug-in is input.

The receiving of the plug-in and displaying of the window may include displaying one of a window to display a message notifying that the received plug-in needs to be installed, a window to display a message notifying that installation of the received plug-in is recommended, and a window to display a message suggesting installation of a new web browser.

The method may further include displaying a message suggesting installation of a new web browser, if the image forming apparatus determines that the second web browser is not able to normally display the UI content.

The attribute information of the second web browser may include at least one of a type and version of the second web browser, an installed plug-in, an installable plug-in and a riskiness rating.

The provided plug-in may include at least one of information regarding a resolution, a font type, a font size, style information corresponding to a graphical library, a brightness of a browser and a touch sensitivity of a touch screen.

If the received plug-in is installed in the host device, the host device is able to access the UI content.

Additional aspects and/or advantages of the disclosure will be set forth in part in the description which follows and, in part, will be obvious from the description, or may be learned by practice of the disclosure.

These and/or other aspects and advantages of the present disclosure will become apparent and more readily appreciated from the following description of the embodiments, taken in conjunction with the accompanying drawings of which:
FIG. 1 is a block diagram of an image forming system according to an exemplary embodiment of the present disclosure;
FIG. 2 is a block diagram of a host device according to an exemplary embodiment of the present disclosure;
FIG. 3 is a view illustrating a table stored in an image forming apparatus according to an exemplary embodiment of the present disclosure;
FIGS. 4A to 4C are views illustrating pop-up windows to be displayed on a host device according to an exemplary embodiment of the present disclosure;
FIG. 5 is a flowchart illustrating a method of providing UI content in an image forming apparatus according to an exemplary embodiment of the present disclosure;
   and
FIG. 6 is a flowchart illustrating a method of receiving UI content in a host device according to an exemplary embodiment of the present disclosure.

Reference will now be made in detail to the embodiments of the present disclosure, examples of which are illustrated in the accompanying drawings, wherein like reference numerals refer to like elements throughout. Embodiments are described below in order to explain aspects of the present disclosure by referring to the figures.

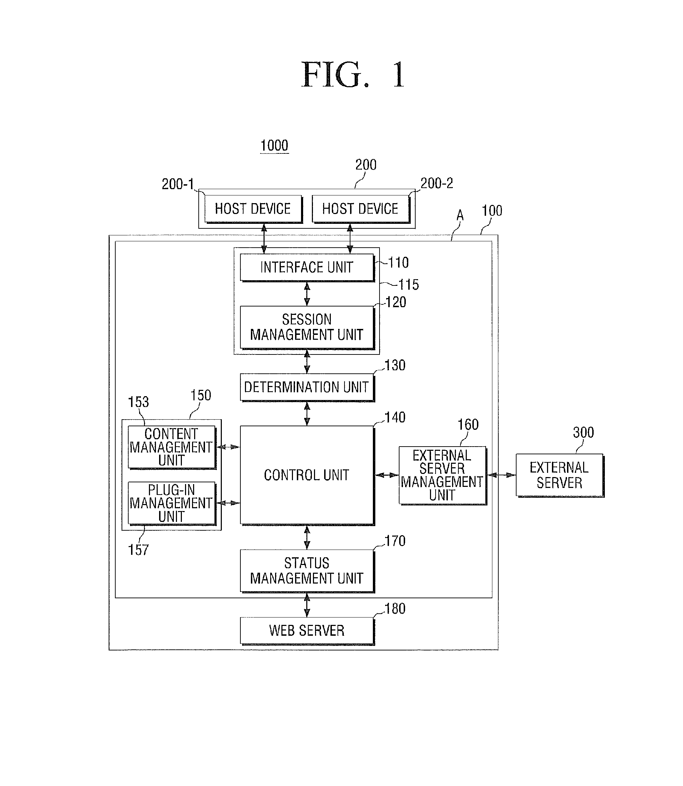

FIG. 1 is a block diagram of an image forming system 1000 according to an exemplary embodiment of the present disclosure. Referring to FIG. 1, the image forming system 1000 may include, for example, an image forming apparatus 100, at least one host device 200 and an external server 300.

The image forming apparatus 100 may be connected to the at least one host device 200 using either a wired or wireless communication scheme. The image forming apparatus 100 and at least one host device 200 may form either the Internet or an Intranet.

The image forming apparatus 100 displays user interface (UI) content generated using any web language on a first display unit of the image forming apparatus 100 through a first web browser. The first display unit may receive a user command by way of a touch screen or through keys input on an operating panel.

The at least one host device 200 may be a host personal computer (PC). Alternatively, the at least one host device 200 may be a mobile apparatus, such as a cellular phone, a personal digital assistant (PDA), or a portable multimedia player (PMP), having an engine that is capable of remotely transmitting various commands to the image forming apparatus 100. The at least one host device 200 may check an IP address applied to the image forming apparatus 100 and may access the image forming apparatus 100.

The host device 200 displays the UI content provided by the image forming apparatus 100 on a second display unit of the host device 200 through a second web browser. As illustrated in FIG. 1, two host devices 200-1 and 200-2 are connected to the image forming apparatus 100, but different numbers of host devices may be connected.

The external server 300 enables a manufacturer of the image forming apparatus 100 to provide update information, problem solving information or other types of information that may enhance user convenience. For example, the external server 300 may be provided in the form of a hub site.

The UI content may include one or more of images, text, and tags, which are used to form a web browser. The web browser may be, for example, MSIE, Firefox, Opera, CHrome, Safari, Maemo, Android, or LiMo. The web-based language may be, for example, HTML, XML, JSP, ASP, PHP, Flex, or JavaFX.

The image forming apparatus 100 according to an exemplary embodiment of the present disclosure may include, for example, an interface unit 110, a session management unit 120, a determination unit 130, a control unit 140, a storage unit 150, an external server management unit 160, a status management unit 170 and a web server 180.

In this situation, the interface unit 110, the session management unit 120, the determination unit 130, the control unit 140, the storage unit 150, the external server management unit 160 and the status management unit 170 may form, for example, a browser checker A to check a web browser of the host device 200.

The interface unit 110 and the session management unit 120 may form a receiving unit 115.

The interface unit 110 interfaces with the host device 200 having the second web browser.

When the host device 200 accesses the image forming apparatus 100 and requests UI content, the session management unit 120 checks information regarding the second web browser of the host device 200, namely, checks attribute information of the second web browser.

More specifically, when the host device 200 accesses the image forming apparatus 100, the image forming apparatus 100 may register the host device 200 to the session management unit 120, and the session management unit 120 may check and manage the connection status of the currently connected host device 200 periodically. Additionally, the session management unit 120 may manage history information regarding the host device 200 connected to the image forming apparatus 100.

When the host device 200 including the second web browser accesses the image forming apparatus 100 using location information of the image forming apparatus 100, and then requests UI content of the image forming apparatus 100, the receiving unit 115 receives the attribute information of the second web browser.

The attribute information of the second web browser includes, for example, at least one of a type and version of the second web browser, an inventory of installed plug-ins, an inventory of installable plug-ins, and a riskiness rating.

The receiving unit 115 may include the interface unit 110 and the session management unit 120.

The determination unit 130 determines whether the second web browser is able to normally display UI content of the first web browser, based on the attribute information, namely the information regarding the second web browser. Herein, normally displaying UI content refers to similarly displaying the same UI content on the second display unit of the host device 200 as that displayed on the first display unit of the image forming apparatus 100.

The determination unit 130 may use information stored in the storage unit 150 to perform the above-described determination. For example, the above-described determination may be made using a lookup table stored in the image forming apparatus 100.

Alternatively, the determination unit 130 may request the external server management unit 160 to inquire of the external server 300 whether the second web browser is able to normally display UI content of the first web browser.

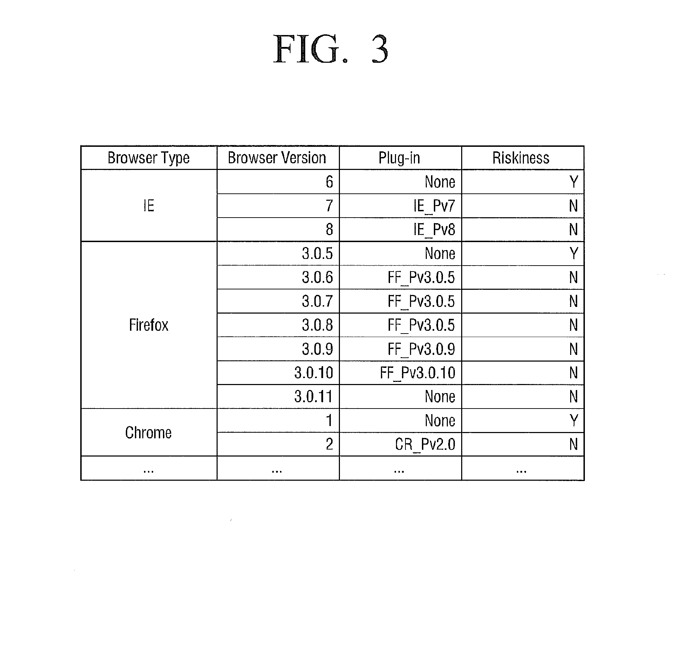

The operation of the determination unit 130 will be described in greater detail with reference to FIG. 3 later.

The control unit 140 controls the overall operation of the image forming apparatus 100. According to the result of a determination performed by the determination unit 130, the control unit 140 may provide a plug-in corresponding to the second web browser. The plug-in provided by the image forming apparatus 100 may be installed in the host device 200 so that the host device 200 may access the UI content.

In more detail, if the determination unit 130 determines that the second web browser is not able to normally display the UI content of the first web browser, the control unit 140 may control the interface unit 110 to provide a plug-in to the host device 200 that requests the UI content.

Subsequently, when the plug-in is installed in the host device 200 and then an event signal to request UI content is received from the host device 200, the control unit 140 may provide the UI content to the host device 200 that requests the UI content.

Therefore, the host device 200 may normally display the UI content of the image forming apparatus 100 on the second web browser which is in a different form from the first web browser of the image forming apparatus 100. A user's screen may thus be optimized, thereby promoting user convenience.

Additionally, the control unit 140 may control the second display unit to display information regarding the plug-in provided to the host device 200.

Furthermore, if the determination unit 130 determines that there is no plug-in corresponding to the second web browser, the control unit 140 may control the second display unit to display a message or an icon stating that there is no plug-in corresponding to the second web browser.

When there is no plug-in corresponding to the second web browser, the first display unit may display a message or an icon recommending a third type of web browser to enable the same UI content as that displayed on the first web browser to be displayed on the second display unit.

Plug-in refers, for example, to a program installed to solve problems such as a malfunction of the image forming apparatus 100 or any other unpleasant or undesirable user experience (UX) caused by the fact that the first web browser of the image forming apparatus 100 performs rendering on web pages and displays the rendered web pages in a different way than the second web browser of the host device 200. The plug-in helps the second web browser to normally display the UI content of the first web browser. The plug-in may also be represented by various terms such as add-in, add-on, or ActiveX.

The plug-in may have a predetermined file format with a file name and a file extension. To perform rendering in a web browser, the plug-in may include a variety of information such as a screen resolution, a font type, a font size, style information corresponding to a graphical library, a brightness of a web browser, and a touch sensitivity in the case of a touch screen. The information contained in the plug-in may be changed, and may be received from the external server 300 or may be stored in the storage unit 150. Accordingly, if an appropriate plug-in is installed in the host device 200, setting values for the above-described information associated with UI content may be changed during rendering in the second web browser of the host device 200.

In the plug-in provided to the host device 200, at least one of the resolution, the font type, the font size, the brightness of the web browser, the touch sensitivity and the style information may be changed.

When the determination unit 130 determines that the second web browser is not able to normally display the UI content of the image forming apparatus 100, the control unit 140 may control the interface unit 110 to transmit a message suggesting installation of a new type of web browser to the host device 200.

The control unit 140 may determine whether to provide a plug-in or a new type of web browser, after taking into consideration the operation status of the image forming apparatus 100 through the status management unit 170, which will be described later.

The control unit 140 authenticates the host device 200 connected to the image forming apparatus 100. In this situation, if authentication of the host device 200 fails, the host device 200 is not able to access the image forming apparatus 100. In other words, the control unit 140 may register the authenticated host device 200 to the image forming apparatus 100. Various known algorithms may be applied for the authentication of the host device 200.

The control unit 140 may include the determination unit 130 to determine whether the second web browser is able to normally display UI content of the first web browser.

The storage unit 150 stores UI content information and plug-in information. The storage unit 150 may include, for example, a content management unit 153 to manage and store the UI content information, and a plug-in management unit 157 to manage and store the plug-in information.

The UI content information stored in the content management unit 153 may include UI content to be displayed on the first display unit of the image forming apparatus 100, a page to induce installation of a plug-in suitable for the host device 200, and a page to present a method for solving a problem whereby UI content provided by the image forming apparatus 100 is not supported by the host device 200 that requests the UI content.

The plug-in information stored in the plug-in management unit 157 may include, for example, a type of plug-in applicable to various web browsers, a type and version of a web browser, and a riskiness rating. Additionally, the plug-in information may include, for example, the resolution, the font type, the font size, the brightness of the web browser, the touch sensitivity and the style information, according to the type of plug-in.

The plug-in management unit 157 may store information regarding a type and version of a web browser, a plug-in and a riskiness rating in the form of a table. The UI content information stored in the content management unit 153 may be updated by the external server 300. Newly updated plug-in information such as a version and type of plug-in may also be updated by the external server 300.

Alternatively, the UI content information and plug-in information may be stored together in the storage unit 150, rather than being separately stored in the content management unit 153 and the plug-in management unit 157.

As opposed to the description in the drawing, the content management unit 153 and the plug-in management unit 157 may be disposed outside of the storage unit 150, and may manage the UI content information and the plug-in information, respectively, and the managed information may be stored in the storage unit 150.

The content management unit 153 and the plug-in management unit 157 are contained in the storage unit 150 as illustrated in FIG. 1, but the content management unit 153 and the plug-in management unit 157 may be disposed outside of the storage unit 150.

The external server management unit 160 receives the UI content information and the plug-in information from the external server 300 disposed outside of the image forming apparatus 100, and updates the received information.

The status management unit 170 receives status information regarding the image forming apparatus 100 from the web server 180 included in the image forming apparatus 100. In more detail, the status management unit 170 checks whether the image forming apparatus 100 is booting, or whether it is possible to access the image forming apparatus 100, or whether to send a standby command to the host device 200 that requests new access after failing to access the image forming apparatus 100. The status management unit 170 receives an event signal from the web server 180, and then checks the status of the image forming apparatus 100.

The web server 180 creates UI content using a web-based language. The web server 180 may parse web-based languages other than HTML into the HTML format.

The image forming apparatus 100 illustrated in FIG. 1 includes only the browser checker A and the web server 180, however there is no limitation thereto. Accordingly, the image forming apparatus 100 may further include function modules (not illustrated) to actually perform various functions of the image forming apparatus 100, although such function modules are omitted for convenience of description.

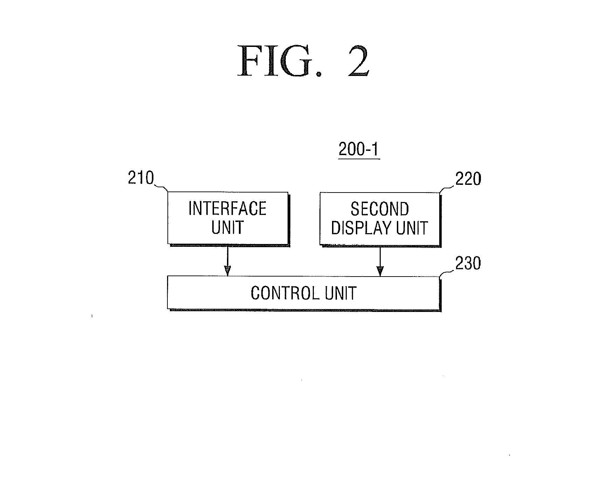

FIG. 2 is a block diagram of a host device 200-1 according to an exemplary embodiment of the present disclosure. Referring to FIG. 2, the host device 200-1 includes an interface unit 210, a second display unit 220, and a control unit 230. The host device 200-1 is at least one of host devices 200-1 and 200-2, and is illustrated as the host device 200 hereinbelow.

The host device 200 is connected to the image forming apparatus 100, which displays the UI content generated using a web language on the first display unit through the first web browser.

The interface unit 210 accesses the image forming apparatus 100 and transmits a UI content request command to the image forming apparatus 100. If the determination unit 130 of the image forming apparatus 100 determines that the second web browser is not able to normally display the requested UI content, the interface unit 210 receives a plug-in from the image forming apparatus 100.

In this situation, the received plug-in may include, for example, information regarding a resolution, a font type, a font size, style information corresponding to a graphical library, a brightness of a browser and a touch sensitivity of a touch screen. Additionally, any of the information contained in the plug-in may be changed.

The second display unit 220 displays a window (or a page) to check whether a plug-in is installed in the host device 200.

In more detail, according to the control of the control unit 230, the second display unit 220 may display one of a window to display a message or an icon indicating that the received plug-in needs to be installed, a window to display a message or an icon indicating that installation of the received plug-in is recommended, and a window to display a message or an icon suggesting installation of a new web browser. In this situation, the window to check whether a plug-in is installed in the host device 200 may be a pop-up window.

The second display unit 220 may receive a user command in the form of a touch screen, or through various input devices (not illustrated) such as a keyboard, a mouse, or a stylus pen of the host device 200.

If a user enters a plug-in installation command, the control unit 230 installs a plug-in.

After the plug-in is installed, the interface unit 210 receives the requested UI content from the image forming apparatus 100. In this situation, the control unit 230 may control the interface unit 210 to receive the requested UI content automatically after the plug-in is installed, or may control the interface unit 210 to receive the requested UI content when a predetermined event signal, such as a user command, is received after the plug-in is installed. In the latter case, the interface unit 210 may transmit the UI content request command to the image forming apparatus 100.

Therefore, the second display unit 220 of the host device 200 having the second web browser may display the same UI content as that displayed on the first display unit of the image forming apparatus 100 having the first web browser, thereby enhancing user convenience.

FIG. 3 exemplarily illustrates a table stored in the image forming apparatus according to the present disclosure.

The table of FIG. 3 includes four fields, namely, a browser-type field, a browser-version field, a plug-in field and a riskiness field.

The plug-in field shows the type of plug-in to display a screen optimized for the requested browser. In the table of FIG. 3, plug-in FF_Pv3.0.5 is requested to be installed in Firefox browser versions 3.0.6, 3.0.7 and 3.0.8.

The riskiness field may contain rating information regarding whether incorrect installation of a plug-in causes errors that may occur when the second browser that requests UI content displays the UI content of the image forming apparatus 100. A 'Y' in the riskiness field indicates that a plug-in necessarily needs to be installed, and an 'N' in the riskiness field indicates that no severe error is found when the host device 200 displays UI content of the image forming apparatus, 100 even when the plug-in is not installed.

If the riskiness field is set to 'Y,' but the plug-in field is set to 'None,' the second browser of the host device 200 is not able to access the image forming apparatus 100.

Hereinafter, the operational principle according to aspects of the present disclosure will be described in greater detail with reference to the table illustrated in FIG. 3.

The host device 200 accesses the image forming apparatus 100, and requests the UI content displayed on the first display unit of the image forming apparatus 100 through the first web browser.

The determination unit 130 of the image forming apparatus 100 determines whether the second web browser is able to normally display the UI content of the first web browser. The storage unit 150 stores the information received from the external server 300, in the form of a table as illustrated in FIG. 3. Alternatively, the control unit 140 may control the external server management unit 160 to directly access the external server 300 and to perform the above-described determination.

For example, it is assumed that the image forming apparatus 100 includes Mozilla Firefox browser version 3.0.5 as a first web browser, and the host device 200 includes Microsoft Internet Explorer version 6 as a second web browser.

As illustrated in the table of FIG. 3, since the riskiness field corresponding to the Firefox browser version 3.0.5 is set to 'Y,' plug-in FF_Pv3.0.5 needs to be installed in the host device 200. Accordingly, the image forming apparatus 100 may transmit to the host device 200 a message requesting that plug-in FF_Pv3.0.5 should be installed in the host device 200, under the control of the control unit 140.

However, if plug-in FF_Pv3.0.5 is not installed in the host device 200, the second display unit 220 may not read any UI content, for example the second web browser may not be able to display a part of the UI content of the image forming apparatus 100 on the second display unit 220, or may not be able to display a necessary pop-up window on the second display unit 220.

Additionally, it is assumed that the image forming apparatus 100 includes Mozilla Firefox browser version 3.0.6 as a first web browser, and the host device 200 includes Microsoft Internet Explorer version 6 as a second web browser.

In this situation, since the riskiness field corresponding to the Firefox browser version 3.0.6 is set to 'N,' as illustrated in the table of FIG. 3, plug-in FF_Pv3.0.6 is recommended to be installed in the host device 200. Accordingly, the image forming apparatus 100 may transmit to the host device 200 a message recommending that plug-in FF_Pv3.0.6 be installed in the host device 200, under the control of the control unit 140.

However, if plug-in FF_Pv3.0.6 is not installed in the host device 200, the second web browser may read the UI content of the image forming apparatus 100, but the second display unit 220 may display UI content in a format that may lead to an unpleasant user experience (UX). In this situation, such unpleasant user experiences (UX) may be caused, for example, by a change in the size of letters in a text box in the UI content or by a change in arrangement of letters in the text box in the UI content from the left-handed form to the right-handed form.

Furthermore, it is assumed that the image forming apparatus 100 includes Mozilla Firefox browser version 3.0.11 as a first web browser, and the host device 200 includes Microsoft Internet Explorer version 6 as a second web browser.

As illustrated in the table of FIG. 3, the riskiness field and the plug-in field which correspond to the Firefox browser version 3.0.11 are set to 'N,' and 'None,' respectively, and accordingly it is impossible for the second web browser, namely Microsoft Internet Explorer version 6, to display the UI content of the image forming apparatus 100. Therefore, the image forming apparatus 100 may transmit a message recommending installation of Firefox browser version 3.0.11 to the host device 200, under the control of the control unit 140.

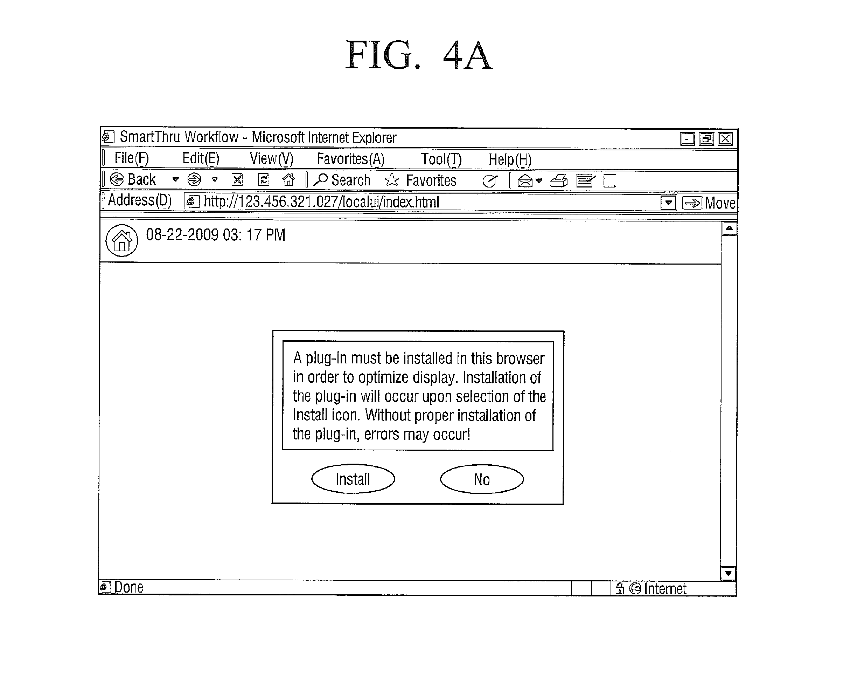

FIGS. 4A to 4C are views illustrating pop-up windows to be displayed on the host device according to the present disclosure.

Referring to FIG. 4A, the second display unit 220 may show a message stating that a plug-in is recommended to be installed in the host device 200, through the second web browser. The message shown in FIG. 4A may be received from the image forming apparatus 100. If a user selects 'Install' on the message, the plug-in may be installed in the host device 200.

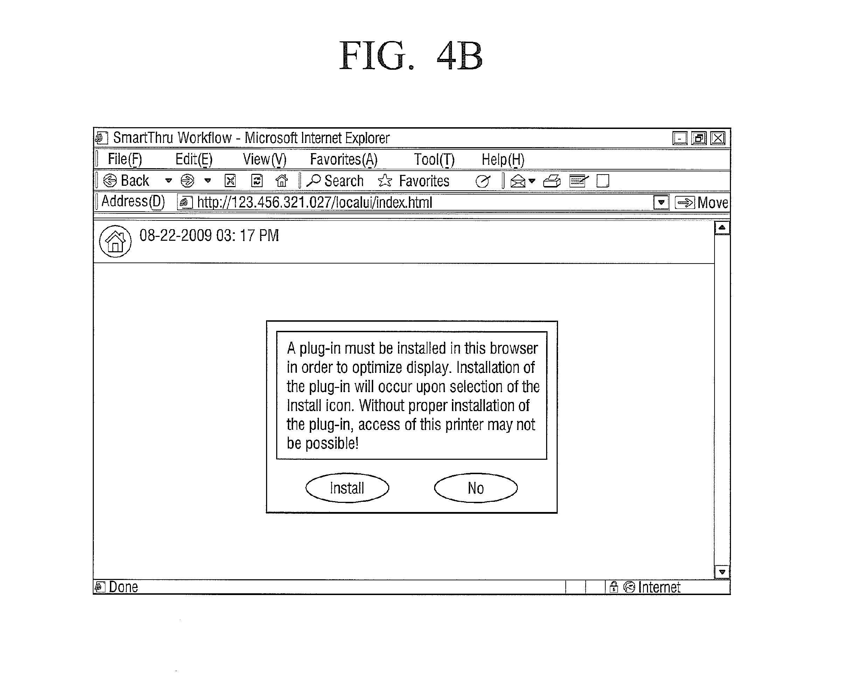

Referring to FIG. 4B, the second display unit 220 may show a message stating that a plug-in necessarily needs to be installed in the host device 200 through the second web browser. If a user does not select 'Install' on the message of FIG. 4B, the second web browser is not able to display the UI content of the image forming apparatus 100 on the second display unit 220.

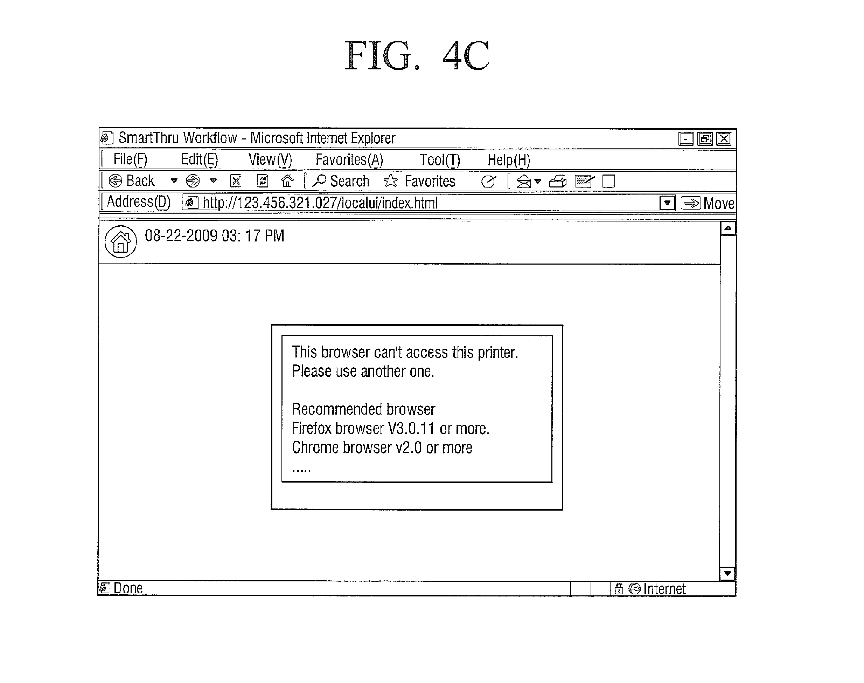

Referring to FIG. 4C, the second display unit 220 may display a message stating that it is impossible to display the UI content of the image forming apparatus 100 on the second display unit 220 when the second web browser of the host device 200 is used. In this situation, the message of FIG. 4C may further suggest installation of browsers other than the second web browser.

The pop-up window of FIG. 4A displays only the message on the second display unit 220, but an icon may also be displayed together with the message on the second display unit 220, or only an icon may be displayed on the second display unit 220.

The second display unit 220 of the host device 200 displays the above-described messages or icons as illustrated in FIGS. 4A to 4C, but there is no limitation thereto. Accordingly, the above-described messages or icons may be displayed on the first display unit of the image forming apparatus 100.

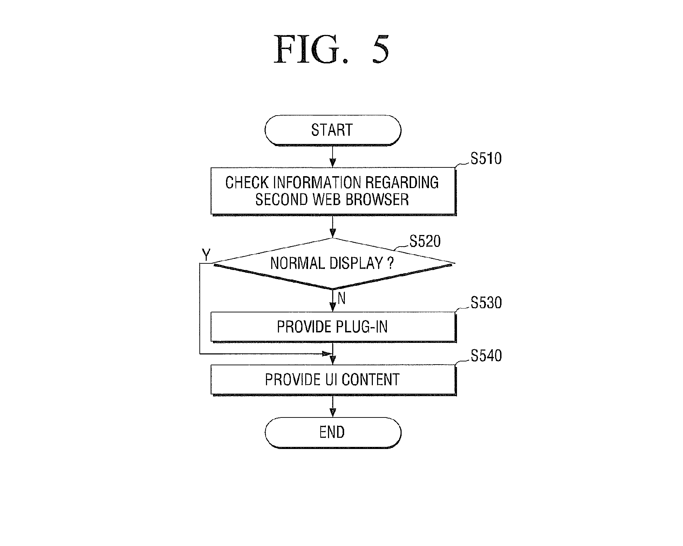

FIG. 5 is a flowchart illustrating a method of providing UI content in the image forming apparatus according to the exemplary embodiment of the present disclosure. Referring to FIG. 5, if the host device 200 having the second web browser accesses the image forming apparatus 100 and then requests UI content, the information regarding the second web browser (namely, the attribute information of the second web browser) is received in operation S510.

In more detail, when the host device 200, having the second web browser, accesses the image forming apparatus 100 using location information of the image forming apparatus 100, and then requests UI content of the image forming apparatus 100, the attribute information of the second web browser is received in operation S510.

Subsequently, whether the second web browser is able to normally display UI content of the first web browser is determined based on the received attribute information in operation S520. In other words, whether the second display unit of the host device 200 displays the same UI content as that displayed on the first display unit of the image forming apparatus 100 is determined using the attribute information in operation S520.

If it is determined that the second web browser is not able to normally display the UI content of the first web browser in operation S520-N, a plug-in is provided to the host device 200 that requests the UI content in operation S530.

Next, the requested UI content is provided to the host device 200 that requests the UI content in operation S540.

Alternatively, if it is determined that the second web browser is able to normally display the UI content of the first web browser in operation S520-Y, the requested UI content is transmitted to the host device 200.

Additionally, if the determination unit 130 determines that the second web browser is not able to normally display the UI content of the first web browser in operation S520-N, a message suggesting installation of a new browser may be transmitted to the host device 200 in a different manner from that illustrated in FIG. 5.

In operation S530, the image forming apparatus 100 may provide the UI content together with the plug-in to the host device 200. When an event signal to request UI content is received from the host device 200, which receives the plug-in from the image forming apparatus 100, the image forming apparatus 100 may transmit the UI content to the host device 200.

The method of providing UI content in the image forming apparatus 100 may further include storing UI content information and plug-in information.

The method of providing UI content in the image forming apparatus 100 may further include receiving UI content information and plug-in information from the external server 300 disposed in the outside of the image forming apparatus 100 and updating the received information.

Therefore, the second display unit 220 of the host device 200 having the second web browser may display the same UI content as that displayed on the first display unit of the image forming apparatus 100 having the first web browser, thereby enhancing user convenience.

The method of providing UI content in the image forming apparatus according to the exemplary embodiment of the present disclosure may alternatively be performed only through operations S510, S520 and S530.

Any overlapping description may be omitted for convenience of description.

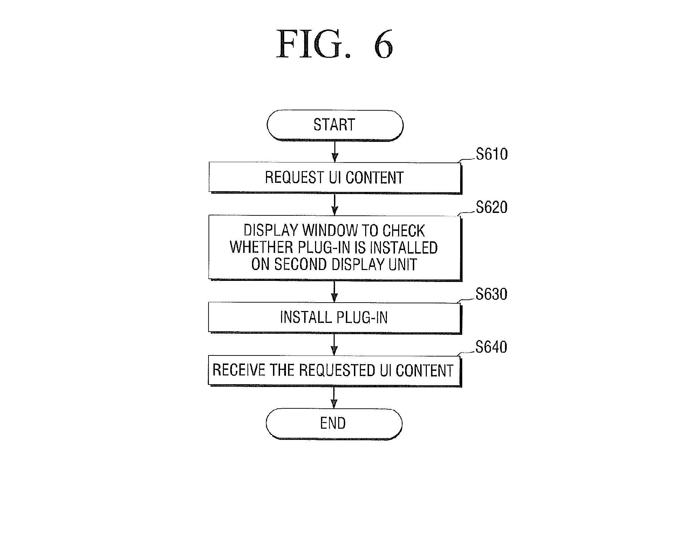

FIG. 6 is a flowchart illustrating a method of receiving UI content in the host device according to the exemplary embodiment of the present disclosure.

Referring to FIG. 6, the host device 200 accesses the image forming apparatus 100 and then requests UI content in operation S610.

If the image forming apparatus 100 determines that the second web browser is not able to normally display the UI content, the host device 200 receives a plug-in from the image forming apparatus 100, and displays a window to check whether the plug-in is installed in the host device 200 on the second display unit 220 in operation S620.

Subsequently, if the plug-in installation command is input, the plug-in is installed in the host device 200 in operation S630.

After operation S630, the host device 200 receives the requested UI content from the image forming apparatus 100 in operation S640.

In operation S620, the second display unit 220 may display one or more of a window to display a message notifying that the received plug-in needs to be installed, a window to display a message notifying that installation of the received plug-in is recommended, and a window to display a message suggesting installation of a new web browser.

The method of receiving UI content in the host device may further include displaying a message suggesting installation of a new web browser, if the image forming apparatus 100 determines that the second web browser is not able to normally display the UI content.

Therefore, the host device 200 may normally display the UI content provided by the image forming apparatus 100 using the second web browser, which is in a different form from the first web browser of the image forming apparatus 100, and thus it is possible to enhance user convenience.

In a method of receiving UI content in a host device according to another exemplary embodiment of the present disclosure, a host device 200 including a second web browser accesses an image forming apparatus 100 using location information of the image forming apparatus 100, and then requests UI content of the image forming apparatus 100 connected to the second web browser.

Subsequently, the host device 200 transmits attribute information of the second web browser to the image forming apparatus 100.

After receiving the attribute information, if the image forming apparatus 100 determines, using the received attribute information, that the same UI content as that displayed on the first display unit is not able to appear on the second display unit 220 of the host device 200, the host device 200 receives a plug-in from the image forming apparatus 100 and displays a window to check whether the plug-in is installed in the host device 200 on the second display unit 220.

Subsequently, if the plug-in installation command is input, the plug-in is installed in the host device 200.

Here again, overlapping description may be omitted for convenience of description.

The method of providing UI content in the image forming apparatus and the method of receiving UI content in the host device according to the aspects of the present disclosure may be implemented using a single processor or chip to perform each operation. The method may also be executed on any general purpose computer or special purpose computer including an image forming system or apparatus.

Aspects of the present disclosure can also be embodied as a computer-readable recording medium including a program to perform the method of providing UI content in the image forming apparatus and the method of receiving UI content in the host device according to the aspects of the present disclosure described above. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that a computer-readable code is stored and executed in a distributed fashion.

Although a few embodiments of the present disclosure have been shown and described, it would be appreciated by those skilled in the art that changes may be made in these embodiments without departing from the principles of the invention, the scope of which is defined in the claims.

## Claims

1. A method of providing user interface (UI) content in an image forming apparatus, which is connected to at least one host device and in which a web server and a first web browser are installed to display UI content created using a web language on a first display unit, the method comprising:
receiving attribute information of a second web browser installed in the host device, if the host device accesses the image forming apparatus using location information of the image forming apparatus and the second web browser requests the UI content of the image forming apparatus connected to the host device;
determining whether the UI content displayed on the first display unit is identical to content displayed on a second display unit of the host device, using the received attribute information; and
providing a plug-in corresponding to the second web browser according to a result of the determining.

2. The method as claimed in claim 1, wherein the attribute information of the second web browser comprises at least one of a type and version of the second web browser, an installed plug-in, an installable plug-in and a riskiness rating.

3. The method as claimed in claim 1, wherein the provided plug-in comprises at least one of information regarding a resolution, a font type, a font size, style information corresponding to a graphical library, a brightness of a browser and a touch sensitivity of a touch screen.

4. The method as claimed in claim 1, further comprising:
recommending a third web browser to enable the same UI content as that displayed on the first display unit to be displayed on the second display unit, if there is no plug-in corresponding to the second web browser.

5. The method as claimed in claim 1, wherein the determining of whether the UI content displayed on the first display unit is identical to the content displayed on the second display unit is performed using a lookup table, which is stored in the image forming apparatus and contains the attribute information of the second web browser.

6. An image forming apparatus, which is connected to at least one host device and in which a web server and a first web browser are installed to display user interface (UI) content created using a web language on a first display unit, the image forming apparatus comprising:
a receiving unit to receive attribute information of a second web browser installed in the host device, if the host device accesses the image forming apparatus using location information of the image forming apparatus and the second web browser requests the UI content of the image forming apparatus connected to the host device;
a determination unit, controlled by a processor, to determine whether the UI content displayed on the first display unit is identical to content displayed on a second display unit of the host device, using the received attribute information; and
a control unit to provide a plug-in corresponding to the second web browser according to a result of determining.

7. The image forming apparatus as claimed in claim 6, wherein the attribute information of the second web browser comprises at least one of a type and version of the second web browser, an installed plug-in, an installable plug-in and a riskiness rating.

8. The image forming apparatus as claimed in claim 6, wherein the provided plug-in comprises at least one of information regarding a resolution, a font type, a font size, style information corresponding to a graphical library, a brightness of a browser and a touch sensitivity of a touch screen.

9. The image forming apparatus as claimed in claim 6, wherein the second display unit displays a message or an icon stating that there is no plug-in corresponding to the second web browser upon determining that there is no plug-in corresponding to the second web browser.

10. The image forming apparatus as claimed in claim 6, wherein the determination unit determines whether the UI content displayed on the first display unit is identical to the content displayed on the second display unit, using a lookup table, which is stored in the image forming apparatus and contains the attribute information of the second web browser.

11. A method of receiving user interface (UI) content in a host device, which is connected to an image forming apparatus to display UI content created using a web language on a first display unit through a first web browser, the method comprising:
the host device in which a second web browser is installed accessing the image forming apparatus using location information of the image forming apparatus;
the second web browser requesting the UI content of the image forming apparatus connected to the host device;
transmitting attribute information of the second web browser;
receiving a plug-in from the image forming apparatus and displaying a window to check whether the plug-in is installed on a second display unit of the host device, if the image forming apparatus determines, using the received attribute information, that the UI content displayed on the first display unit is not able to be similarly displayed on the second display unit; and
installing the plug-in in the host device, if a command to install the plug-in is input.

12. The method as claimed in claim 11, wherein the receiving of the plug-in and displaying of the window comprises displaying one of a window to display a message notifying that the received plug-in needs to be installed, a window to display a message notifying that installation of the received plug-in is recommended, and a window to display a message suggesting installation of a new web browser.

13. The method as claimed in claim 11, further comprising:
displaying a message suggesting installation of a new web browser, if the image forming apparatus determines that the second web browser is not able to normally display the UI content.

14. The method as claimed in claim 11, wherein the attribute information of the second web browser comprises at least one of a type and version of the second web browser, an installed plug-in, an installable plug-in and a riskiness rating.

15. The method as claimed in claim 11, wherein the provided plug-in comprises at least one of information regarding a resolution, a font type, a font size, style information corresponding to a graphical library, a brightness of a browser and a touch sensitivity of a touch screen.
